# EUROPÄISCHE PATENTSCHRIFT

(11) **EP 3 350 557 B1**
(45) Veröffentlichungstag und Bekanntmachung des Hinweises auf die Patenterteilung: **13.01.2021**
(21) Anmeldenummer: 16763460.9
(22) Anmeldetag: 26.08.2016
(51) Int. Cl.: G01K 15/00, G01K 13/02, G01K 7/16, G01K 7/02

(54) **VERFAHREN ZUR KALIBRIERUNG EINES IN EINEM PROZESS DER AUTOMATISIERUNGSTECHNIK BEFINDLICHEN TEMPERATURSENSORS**
METHOD FOR CALIBRATING A TEMPERATURE SENSOR PRESENT IN AN AUTOMATION TECHNOLOGY PROCESS
PROCÉDÉ D'ÉTALONNAGE D'UN CAPTEUR DE TEMPÉRATURE PRÉSENT DANS UN PROCESSUS DE LA TECHNIQUE D'AUTOMATISATION

(30) Priorität: 15.09.2015 DE 102015115535
(43) Veröffentlichungstag der Anmeldung: 25.07.2018
(73) Patentinhaber: Endress+Hauser Wetzer GmbH+Co. KG, 87484 Nesselwang (DE)
(72) Erfinder: KALTEIS, Helmut, 87616 Marktoberdorf (DE)
(74) Vertreter: Andres, Angelika Maria
(86) Internationale Anmeldenummer: PCT/EP2016/070171
(87) Internationale Veröffentlichungsnummer: WO 2017/045895

(56) Entgegenhaltungen:
- EP-A1- 1 102 048
- EP-A2- 2 440 897
- DE-A1- 10 254 444
- US-A1- 2009 201 968
- US-B1- 8 851 744

## Beschreibung

Die Erfindung betrifft ein Verfahren zur Kalibrierung eines in einem Prozess der Automatisierungstechnik befindlichen Temperatursensors. Eine Kalibrierung im Prozess wird auch als in situ Kalibrierung bezeichnet. Weiterhin bezieht sich die Erfindung auf eine Temperaturmessvorrichtung, die zur Durchführung des Kalibrierverfahrens geeignet ist.

Temperatursensoren werden in der Automatisierungstechnik in den unterschiedlichsten Anwendungen bzw. Applikationen eingesetzt. Eine Vielzahl von unterschiedlichen Temperatursensoren wird von der Anmelderin angeboten und vertrieben. Oftmals sind Temperatursensoren an einer Behälterwand (Rohrwand, Tankwand) derart befestigt, dass die temperatursensitive Komponente des Temperatursensor in thermischem Kontakt mit einem im Prozess befindlichen Medium ist, dessen Temperatur bestimmt oder überwacht werden soll.

Ein grundlegendes Problem für eine stabile und zuverlässige Temperaturmessung stellt die Drift der Temperatursensoren dar. Diese Drift bedingt, dass die Temperatursensoren in gewissen zeitlichen Abständen kalibriert werden müssen. Hierbei sind die Zeitabstände zwischen den Kalibrierungen stark abhängig von der jeweiligen Ausgestaltung des Temperatursensors und den Bedingungen, die am Einsatzort des Temperatursensors im Prozess herrschen.

Zum Zwecke des Kalibrierens muss ein Temperatursensor üblicherweise ausgebaut und in Kontakt mit einem geeigneten Kalibriermedium definierter Temperatur, z.B. Eiswasser, gebracht werden. Weicht der im Kalibriermedium gemessene Temperaturwert des Temperatursensors von der bekannten Referenz-Temperatur des Kalibriermediums ab, so wird der gemessene Temperaturwert auf die Referenz-Temperatur korrigiert. Der Ausbau des Temperatursensors ist problematisch, da der Ausbau oftmals eine Unterbrechung des Prozesses notwendig macht - und ein Stillstand einer Anlage ist für den Anlagenbetreiber üblicherweise mit Kosten verbunden. Zudem wird beim Ausbau eine dichte Verbindung zwischen Temperatursensor und Behälterwand aufgehoben, die nachfolgend wieder hergestellt werden muss.

Aus der Patentschrift EP 1247268 B2 ist eine in situ Kalibrierung mit mehreren integrierten Temperatursensoren bekannt geworden. In einen Messeinsatz sind zusätzlich zu einem primären Temperatursensor ein Referenz-Temperatursensor oder mehrere Referenz-Temperatursensoren eingebaut. Ein Referenz-Temperatursensor unterscheidet sich hinsichtlich des Aufbaus und der verwendeten Materialien von dem primären Temperatursensor. Abgesehen davon, dass bei der bekannten Lösung mehrere Temperatursensoren eingesetzt werden müssen, können bei einem Referenz-Temperatursensor vom primären Temperatursensor abweichende Alterungseffekte und Kennliniendriften auftreten. So werden gemäß einer Ausgestaltung parallel zu einem primären Pt100-Widerstandssensor Halbleiter-Temperatursensoren - sog. NTC/PTC-Widerstände - als Referenz-Temperatursensoren verwendet. Damit die Temperaturmessung bei der bekannten Lösung zuverlässig arbeitet, müssen die Kennlinien und die Alterungseigenschaften der Referenz-Temperatursensoren sehr genau bekannt sein; zumindest aber müssen die Kennlinienänderungen der Referenz-Temperatursensoren geringer sein als beim zu überwachenden primären Temperatursensor.

Aus der DE 10 2010 040 039 A1 ist ein Temperatursensor mit einem Referenzelement bekannt geworden. Das Referenzelement besteht teilweise aus einem ferroelektrischen Material. Ferroelektrische Materialien erfahren bei einem vorgegebenen, definierten Temperaturwert (Curie Temperatur) eine Phasenumwandlung. Als Folge der Phasenumwandlung ändert sich ihre elektrische Leitfähigkeit schlagartig. Arbeitet der bekannt gewordene Temperatursensor in einem Temperaturbereich, in dem die Phasenumwandlung auftritt, so lässt sich diese detektieren und der gemessene Temperaturwert wird bei einer Abweichung auf die vorgegebene, definierte Temperatur kalibriert bzw. korrigiert. Aus der vorhergehenden Beschreibung lässt sich ersehen, dass die bekannt gewordenen in situ Kalibrier-Lösungen nur mit speziell gefertigten Temperatursensoren funktionieren.

Weitere Kalibrier-Lösungen sind aus der DE 102 54 444 A1 und der EP 1 102 048 A1 bekannt geworden.

Der Erfindung liegt die Aufgabe zugrunde, ein Verfahren vorzuschlagen, das es erlaubt, einen beliebigen herkömmlichen Temperatursensor in situ zu kalibrieren.

Die Aufgabe wird durch ein Kalibrierverfahren gelöst, das die folgenden Verfahrensschritte aufweist:
Vorgeben eines Temperaturmessbereichs, der in dem Prozess der Automatisierungstechnik wiederkehrend durchlaufen wird;
Vorgeben einer in dem Temperaturmessbereich auftretenden Referenz-Temperatur;
Vorgeben einer Zeitspanne, während der die Temperaturmesswerte in dem Temperaturmessbereich zumindest näherungsweise konstant sein sollen;
wobei mindestens ein Parameter zur Kalibrierung des Temperatursensors, welcher Parameter der Temperaturmessbereich, die Referenz-Temperatur oder die Zeitspanne ist, aus dem Prozess mittels des zu kalibrierenden Temperatursensors ermittelt wird, indem nach Installation des Temperatursensors die Temperatur des Prozesses über einen Zeitraum gemessen wird, welcher Zeitraum mehrere Zyklen des Prozesses umfasst, wobei das Verfahren die folgenden weiteren Verfahrensschritte aufweist: Bestimmen der aktuellen Temperaturmesswerte mittels des Temperatursensors;
Erkennen, ob die aktuellen Temperaturmesswerte in dem Temperaturmessbereich während der vorgegebenen Zeitspanne zumindest näherungsweise konstant sind;
Korrigieren des aktuellen Temperaturmesswerts (T) auf die vorgegebene Referenz-Temperatur (*T_{ref}*), wobei der Korrigierensschritt nur erfolgt, wenn der Erkennensschritt erkannt hat, dass die aktuellen Temperaturmesswerte (T) in dem Temperaturmessbereich (ΔT) während der vorgegebenen Zeitspanne (Δt) zumindest näherungsweise konstant sind.

Die erfindungsgemäße Lösung ermöglicht es somit, über die Vorgabe von einigen wenigen Parametern eine zuverlässige in situ Kalibrierung vorzunehmen. Diese Größen sind im einfachsten Fall:
- Die Vorgabe eines Temperaturbereichs, der in dem betreffenden Prozess der Automatisierungstechnik auftritt;
- die Vorgabe einer Referenz-Temperatur innerhalb des obigen Temperaturbereichs;
- die Vorgabe einer Zeitdauer, die ein klares Indiz dafür ist, dass der Temperatursensor innerhalb des Temperaturbereichs zumindest näherungsweise einen Gleichgewichtszustand erreicht hat.

Je genauer die obigen Vorgaben sind, umso zuverlässiger ist die über die Zeit stabile Messgenauigkeit des Temperatursensors. Die Vorgaben ergeben sich durch die von der Anlage durchlaufenen Prozesse. Erfindungsgemäß werden die notwendigen Parameter zumindest teilweise von dem Temperatursensor selbst ermittelt. Hierzu werden die Temperaturmesswerte aufgezeichnet und nach zyklischen Änderungen durchsucht. Bevorzugt erfolgt diese Ermittlungsphase nach der Installation der kalibrierten Temperaturmessvorrichtung in dem Prozess.

Erfindungsgemäß ist es natürlich vorteilhaft, wenn der vorgegebene oder ermittelte Temperaturmessbereich in dem Prozess der Automatisierungstechnik wiederkehrend durchlaufen wird. Bei nahezu allen Prozessen, die in der Automatisierungstechnik durchgeführt werden, ist dies der Fall: Zeiten, in denen die Temperatur auf nahezu konstanten Werten gehalten wird, sind üblicherweise Teil eines jeden Prozesses. Nachfolgend werden nur einige wenige Beispiele genannt, die in der Prozessautomatisierungstechnik eine große Rolle spielen. Es versteht sich von selbst, dass die erfindungsgemäße Lösung nicht auf einen der nachfolgend genannten Prozesse zu beschränken ist.
- Wiederkehrende Sterilisationsprozesse (auch bekannt als SIP Prozesse - Sterilisation In Place) einer Anlage sind insbesondere in der Lebensmittelindustrie aus hygienischen Gründen unerlässlich. Gesetzliche Vorgaben regeln sowohl die Temperatur, bei der die Sterilisation erfolgen muss, als auch die Zeitspanne, während der die Anlage sterilisiert werden muss.
- Wiederkehrende Reinigungsprozesse (CIP Prozesse - Cleaning in Place), bei denen ein Reinigungsmittel einer definierten Temperatur durch die Anlage fließt.
- Wiederkehrende Abschaltungen der Anlage, z.B. nach Arbeitsende, wobei die Referenztemperatur beispielsweise durch die Temperatur der klimatisierten Raumluft gegeben ist.
- Wiederkehrende Heiz- und Kühlzyklen in der Anlage, usw.

Die erfindungsgemäße Temperaturmessvorrichtung, die zur Durchführung des erfindungsgemäßen Kalibrierverfahrens geeignet ist, besteht aus einem beliebigen Temperatursensor und einer Regel-/Auswerteeinheit. Bei dem Temperatursensor kann als temperatursensitives Element ein Widerstandssensor (z.B. aus Platin) in Form eines Drahtes, eines Dünnschichtsensors, eines Dickschichtsensors oder einer Drahtwicklung zum Einsatz kommen. Ebenso kann es sich bei dem temperatursensitiven Element des Temperatursensors um ein Thermoelement handeln. Üblicherweise sind die vorgenannten temperatursensitiven Elemente in eine Vergussmasse oder in ein Pulver gebettet und in einem Messrohr fixiert. Diese Kombination wird üblicherweise als Messeinsatz bezeichnet. Je nach Einsatzort der Temperatursensoren sind diese Messeinsätze noch über eine Isolationsschicht in einem Schutzrohr aus Metall angeordnet.

Die Regel-/Auswerteeinheit ist so ausgestaltet, dass sie den aktuell gemessenen Temperaturmesswert überwacht, und zwar zumindest dann, wenn der Temperaturmesswert des Temperatursensors innerhalb des ausgewiesenen Temperaturmessbereichs liegt und für die vorgegebene Zeitspanne zumindest näherungsweise konstant ist. Liegt der aktuell gemessene Temperaturwert bzw. der Mittelwert der gemessenen Temperaturwerte während der vorgegebenen Zeitspanne außerhalb des Toleranzbereiches der vorgegebenen Referenz-Temperatur, so erfolgt die Korrektur auf die Referenz-Temperatur, und der Temperatursensor ist in situ kalibriert.

Die Erfindung wird anhand der nachfolgenden Figuren näher erläutert. Es zeigt:
Fig. 1: eine schematische Darstellung eines erfindungsgemäßen in situ kalibrierfähigen Temperaturmessgeräts in einem Prozess,
Fig. 2: eine schematische Darstellung des Temperaturverlaufs in einem Prozess der Automatisierungstechnik und
Fig. 3: ein Flussdiagramm, das eine vorteilhafte Ausgestaltung des erfindungsgemäßen Verfahrens beschreibt.

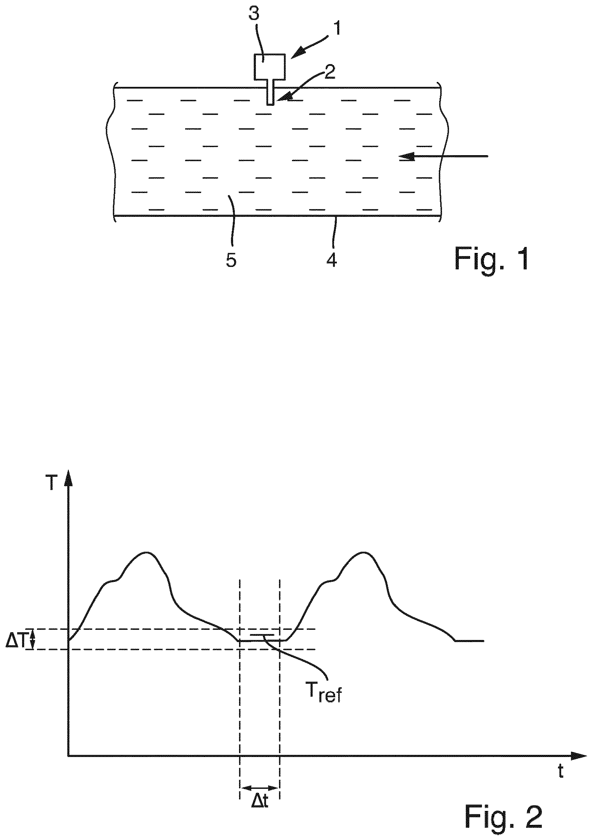

Fig. 1 zeigt eine schematische Darstellung eines erfindungsgemäßen in situ kalibrierfähigen Temperaturmessgeräts 1 in einem Prozess. Im gezeigten Fall bestimmt das Temperaturmessgerät 1 die Temperatur T eines Mediums 5, das eine Rohrleitung 4 in Richtung des Pfeils durchströmt. Das Temperaturmessgerät 1 besteht aus einem Temperatursensor 2 mit einem temperatursensitiven Element und einer Regel-/Auswerteeinheit 3. Während der Temperatursensor 2 mit dem Medium 5 in thermischem Kontakt ist, ist die Regel-/Auswerteeinheit 3 außerhalb der Rohrleitung 4 - und somit außerhalb des eigentlichen Prozesses - angeordnet. Das Medium 5 ist ein beliebiges fluides Medium. Beispiele für temperatursensitive Elemente und entsprechende Temperatursensoren 2 wurden bereits an vorhergehender Stelle nicht abschließend genannt. Eine Vielzahl von Temperaturmessgeräten 1 wird von der Anmelderin für den Einsatz in unterschiedlichsten Applikationen der Automatisierungstechnik angeboten und vertrieben. Generell werden bekannte Temperatursensoren 2 in Verbindung mit der Erfindung als herkömmliche Temperatursensoren bezeichnet. Für alle herkömmlichen Temperatursensoren 2 ist das erfindungsgemäße in situ Kalibrierverfahren geeignet.

Fig. 2 zeigt schematisch den Temperaturverlauf des Mediums 5, das die in Fig. 1 gezeigte Rohrleitung 4 durchströmt. Eine Vielzahl weiterer Anwendungen, in denen Temperatursensoren 2 in der Automatisierungstechnik eingesetzt werden, ist aus dem Stand der Technik bestens bekannt. In allen Anwendungen, bei denen Information über die Temperatur T bereitgestellt werden muss, spielt natürlich auch die Messgenauigkeit der Temperaturmessgeräte 1 eine wichtige Rolle. Um alterungs- oder prozessbedingtes Driften der Temperatursensoren 2 zu kompensieren und damit eine erhöhte Messgenauigkeit zu liefern, kommt das erfindungsgemäße Verfahren bevorzugt in wiederkehrenden Zyklen zur Anwendung.

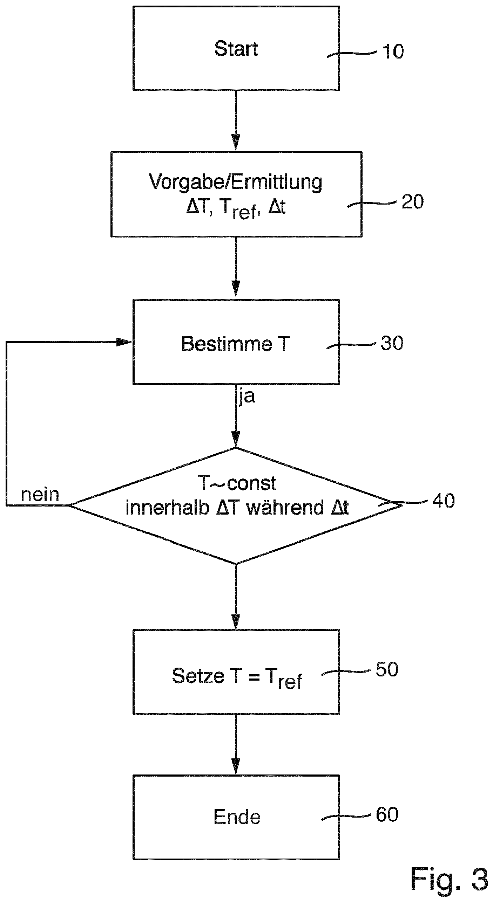

In Fig. 3 ist ein Flussdiagramm dargestellt, das eine vorteilhafte Ausgestaltung des erfindungsgemäßen in situ Kalibrierverfahrens visualisiert. Nach dem Programmstart bei Punkt 10 werden bei Programmpunkt 20 folgende Parameter oder Größen vorgegeben:
- der für den jeweiligen Prozess relevante Temperaturmessbereich ΔT, der in dem Prozess der Automatisierungstechnik möglichst wiederkehrend durchlaufen wird;
- die in dem Temperaturmessbereich ΔT auftretende Referenz-Temperatur *T_{ref},* auf die ggf. korrigiert werden soll;
- die Zeitspanne Δt während der die Temperatur T in dem Temperaturmessbereich ΔT zumindest näherungsweise konstant sein soll.

Unter dem Programmpunkt 30 werden die Temperaturmesswerte T in dem Prozess bestimmt. Bei 40 wird geprüft und erkannt, ob die Temperaturmesswerte T in dem Temperaturmessbereich ΔT während einer vorgegebenen Zeitspanne Δt zumindest näherungsweise konstant sind. Ist diese Bedingung erfüllt, so wird bei Programmpunkt 50 der Temperaturmesswert T auf die vorgegebene Referenz-Temperatur *T_{ref}* korrigiert. Ist diese Bedingung nicht erfüllt, so springt das Programm in einer Schleife auf den Programmpunkt 30 zurück. Die Schleife wird solange durchlaufen, bis die Bedingung erfüllt ist und die Kalibrierung bei Programmpunkt 50 durchgeführt wird. Anschließend wird das Programm bei Programmpunkt 60 beendet.

Wie bereits an vorhergehender Stelle möglich, wird mindestens einer der Parameter: Temperaturmessbereich ΔT, Zeitspanne Δt und Referenz-Temperatur *T_{ref}* aus dem jeweiligen Prozess heraus ermittelt. Hierzu wird nach Installation des (vorkalibrierten) Temperatursensors 2 bzw. des (vorkalibrierten) Temperaturmessgeräts 1 die Temperatur T über einen Zeitraum ermittelt, wobei in den Zeitraum mehrere sich zyklisch wiederholende mögliche Zeitspannen Δt fallen sollten. Z.B. über eine Mittelwertbildung der zyklisch sich wiederholenden Zeitspannen Δt, werden die Werte für die drei Parameter ermittelt.

## Patentansprüche

1. Verfahren zur Kalibrierung eines in einem Prozess der Automatisierungstechnik befindlichen Temperatursensors (2),
**dadurch gekennzeichnet, dass** das Kalibrierverfahren die folgenden Verfahrensschritte aufweist:
Vorgeben eines Temperaturmessbereichs (ΔT), der in dem Prozess der Automatisierungstechnik wiederkehrend durchlaufen wird;
Vorgeben einer in dem Temperaturmessbereich (ΔT) auftretenden Referenz-Temperatur (*T_{ref}*);
Vorgeben einer Zeitspanne (Δt), während der die Temperaturmesswerte (T) in dem Temperaturmessbereich (ΔT) zumindest näherungsweise konstant sein sollen;
wobei mindestens ein Parameter zur Kalibrierung des Temperatursensors (2), welcher Parameter der Temperaturmessbereich (ΔT), die Referenz-Temperatur (*Tᵣₑₜ*) oder die Zeitspanne (Δt) ist, aus dem Prozess mittels des zu kalibrierenden Temperatursensors (2) ermittelt wird, indem nach Installation des Temperatursensors (2) die Temperatur des Prozesses über einen Zeitraum gemessen wird, welcher Zeitraum mehrere Zyklen des Prozesses umfasst, wobei das Verfahren die folgenden weiteren Verfahrensschritte aufweist:
Bestimmen der aktuellen Temperaturmesswerte (T) mittels des Temperatursensors (2);
Erkennen, ob die aktuellen Temperaturmesswerte (T) in dem Temperaturmessbereich (ΔT) während der vorgegebenen Zeitspanne (Δt) zumindest näherungsweise konstant sind;
Korrigieren des aktuellen Temperaturmesswerts (T) auf die vorgegebene Referenz-Temperatur (*T_{ref}*), wobei der Korrigierensschritt nur erfolgt, wenn der Erkennensschritt erkannt hat, dass die aktuellen Temperaturmesswerte (T) in dem Temperaturmessbereich (ΔT) während der vorgegebenen Zeitspanne (Δt) zumindest näherungsweise konstant sind.

2. Verfahren nach Anspruch 1,
wobei der Temperatursensor (2) in dem Prozess der Automatisierungstechnik einem wiederkehrenden Sterilisations- oder Reinigungsprozess unterzogen wird, wobei Sterilisations- oder Reinigungsprozess jeweils bei einer definierten Referenz-Temperatur (*T_{ref}*) durchgeführt werden.

3. Verfahren nach Anspruch 1,
wobei der Prozess der Automatisierungstechnik wiederkehrend unterbrochen wird, wobei während der Zeitdauer der Unterbrechung in der Umgebung des Temperatursensors (2) eine vorgegebene Referenz-Temperatur (*T_{ref}*) herrscht.

4. Verfahren nach einem oder mehreren der vorhergehenden Ansprüche, wobei das Kalibrierverfahren des Temperatursensors (2) aktiviert oder deaktiviert werden kann.

5. Temperaturmessvorrichtung mit einem Temperatursensor (2) und einer Regel-/Auswerteeinheit (3), **dadurch gekennzeichnet, dass** die Regel-/Auswerteeinheit (3) zur Durchführung des in zumindest einem der Ansprüche 1-4 beschriebenen Verfahrens konfiguriert ist.

6. Temperaturmessvorrichtung nach Anspruch 5,
wobei es sich bei dem Temperatursensor (2) um einen Platinwiderstand handelt, der über eine Vergussmasse oder ein Pulver in einem Messrohr fixiert ist.

7. Temperaturmessvorrichtung nach Anspruch 5,
wobei es sich bei dem Temperatursensor (2) um einen Dünnschichtsensor, Dickschichtsensor oder einen drahtgewickelten Temperatursensor handelt, der in einem Messrohr über eine Vergussmasse oder ein Pulver fixiert ist.

8. Temperaturmessvorrichtung nach Anspruch 5,
wobei es sich bei dem Temperatursensor (2) um ein Thermoelement handelt, das in einem Messrohr über eine Vergussmasse oder ein Pulver fixiert ist.

9. Temperaturmessvorrichtung nach zumindest einem der Ansprüche 5-8, wobei der Temperatursensor ein umfänglich angeordnetes Schutzrohr aufweist.

10. Temperaturmessvorrichtung nach zumindest einem der Ansprüche 5-9, wobei die Regel-/Auswerteeinheit (3) das Korrigieren des aktuell gemessenen Temperaturmesswertes (T) auf die Referenz-Temperatur (*T_{ref}*) durchführt, wenn der Temperaturmesswert (T) des Temperatursensors (2) innerhalb des Temperaturmessbereichs (ΔT) liegt und für die vorgegebene Zeitspanne (Δt) zumindest näherungsweise konstant ist.

## Claims

1. Procedure to calibrate a temperature sensor (2) located in an automation technology process,
**characterized in that**
the calibration procedure comprises the following steps:
Specification of a temperature measurement range (ΔT) which is passed through recurrently in the automation technology process;
Specification of a reference temperature (*T_{ref}*) that occurs in the temperature measurement range (ΔT);
Specification of a time interval (Δt) during which the temperature measured values (T) in the temperature measurement range (ΔT) should be at least approximately constant;
wherein at least one parameter is determined for the calibration of the temperature sensor (2) - said parameter being the temperature measurement range (ΔT), the reference temperature (T_{ref}) or the time interval (Δt) - from the process using the temperature sensor (2) to be calibrated, **in that** - following the installation of the temperature sensor (2) - the process temperature is measured over a period of time comprising several cycles of the process, wherein the procedure comprises the following additional process steps:
Determination of the current temperature measured values (T) using the temperature sensor (2);
Detection of whether the temperature measured values (T) in the temperature measurement range (ΔT) are at least approximately constant during the predefined time interval (Δt);
Correction of the current temperature measured value (T) to the predefined reference temperature (*T_{ref}*), wherein the correction step only takes place if the detection step has detected that the current temperature measured values (T), located in the temperature measurement range (ΔT), are at least approximately constant during the predefined time interval (Δt).

2. Procedure as claimed in Claim 1,
wherein the temperature sensor (2) in the automation technology process is subject to a recurrent sterilization or cleaning process, wherein the sterilization or cleaning process is performed at a defined reference temperature (*T_{ref}*)*.*

3. Procedure as claimed in Claim 1,
wherein the automation technology process is interrupted recurrently, wherein a predefined reference temperature (*T_{ref}*) is present for the duration of the interruption in the environment of the temperature sensor (2).

4. Procedure as claimed in one of more of the previous Claims,
wherein the calibration procedure of the temperature sensor (2) can be activated or deactivated.

5. Temperature measuring device with a temperature sensor (2) and a control/evaluation unit (3), **characterized in that** the control/evaluation unit (3) is configured to perform the procedure described in at least one of the Claims 1 to 4.

6. Temperature measuring device as claimed in Claim 5,
wherein the temperature sensor is a platinum resistor which is fixed in a measuring tube via a potting compound or a powder.

7. Temperature measuring device as claimed in Claim 5,
wherein the temperature sensor is a thin-film sensor, thick-film sensor or a wire-wound temperature sensor which is fixed in a measuring tube via a potting compound or a powder.

8. Temperature measuring device as claimed in Claim 5,
wherein the temperature sensor (2) is a thermocouple which is fixed in a measuring tube via a potting compound or a powder.

9. Temperature measuring device as claimed in at least one of the Claims 5 to 8,
wherein the temperature sensor has a thermowell arranged around its circumference.

10. Temperature measuring device as claimed in at least one of the Claims 5 to 9,
wherein the control/evaluation unit (3) corrects the temperature value (T) currently measured to the reference temperature (*T_{ref}*) if the temperature measured value (T) of the temperature sensor (2) is within the temperature measurement range (ΔT) and is at least approximately constant for the predefined time interval (Δt).

## Revendications

1. Procédé destiné à l'étalonnage d'un capteur de température (2) se trouvant dans un process de la technique d'automatisation,
**caractérisé**
**en ce que** le procédé d'étalonnage comprend les étapes de procédé suivantes :
Spécification d'une gamme de mesure de température (ΔT), qui est parcourue de manière récurrente dans le process de la technique d'automatisation ;
Spécification d'une température de référence (*T_{ref}*) présente dans la gamme de mesure de température (ΔT) ;
Spécification d'un intervalle de temps (Δt), pendant lequel les valeurs mesurées de température (T) situées dans la gamme de mesure de température (ΔT) doivent être au moins approximativement constantes ;
au moins un paramètre étant déterminé pour l'étalonnage du capteur de température (2) - lequel paramètre est la gamme de mesure de température (ΔT), la température de référence (T_{ref}) ou l'intervalle de temps (Δt) - à partir du process au moyen du capteur de température (2) à étalonner, **en ce que**, après l'installation du capteur de température (2), la température du process est mesurée sur une durée définie, laquelle durée comprend plusieurs cycles du process, le procédé comprenant les étapes de procédé supplémentaires suivantes :
Détermination des valeurs de température (T) actuellement mesurées au moyen du capteur de température (2) ;
Détection si les valeurs mesurées de température (T) situées dans la gamme de mesure de température (ΔT) sont au moins approximativement constantes dans l'intervalle de temps (Δt) prédéfini ;
Correction de la valeur de température (T) actuellement mesurée à la température de référence (*T_{ref}*), l'étape de correction n'intervenant que si l'étape de détection a détecté que les valeurs de température (T) actuellement mesurées, situées dans la gamme de mesure de température (ΔT), sont au moins approximativement constantes dans l'intervalle de temps (Δt) prédéfini.

2. Procédé selon la revendication 1,
pour lequel le capteur de température (2) est soumis dans le process de la technique d'automatisation à un procédé récurrent de stérilisation ou de nettoyage, le procédé de stérilisation ou de nettoyage étant exécuté à une température de référence (*T_{ref}*) définie.

3. Procédé selon la revendication 1,
pour lequel le process de la technique d'automatisation est interrompu de façon récurrente, une température de référence (*T_{ref}*) spécifiée régnant, pendant la durée de l'interruption, dans l'environnement du capteur de température (2).

4. Procédé selon l'une ou plusieurs des revendications précédentes,
pour lequel le procédé d'étalonnage du capteur de température (2) peut être activé ou désactivé.

5. Dispositif de mesure de température avec un capteur de température (2) et une unité de régulation / d'exploitation (3), **caractérisé en ce que** l'unité de régulation / d'exploitation (3) est configurée pour la réalisation du procédé décrit dans au moins l'une des revendications 1 à 4.

6. Dispositif de mesure de température selon la revendication 5,
pour lequel il s'agit, concernant le capteur de température, d'une résistance platine, laquelle est fixée dans un tube de mesure par l'intermédiaire d'une masse d'enrobage ou d'une poudre.

7. Dispositif de mesure de température selon la revendication 5,
pour lequel il s'agit, concernant le capteur de température, d'un capteur à couches minces, d'un capteur à couches épaisses ou d'un capteur de température bobiné, lequel est fixé dans un tube de mesure par l'intermédiaire d'une masse d'enrobage ou d'une poudre.

8. Dispositif de mesure de température selon la revendication 5,
pour lequel il s'agit, concernant le capteur de température (2), d'un thermo-élément, lequel est fixé dans un tube de mesure par l'intermédiaire d'une masse d'enrobage ou d'une poudre.

9. Dispositif de mesure de température selon au moins l'une des revendications 5 à 8, pour lequel le capteur de température comprend un tube de protection disposé sur la périphérie.

10. Dispositif de mesure de température selon au moins l'une des revendications 5 à 9, pour lequel l'unité de régulation / d'exploitation (3) effectue la correction de la valeur de température (T) actuellement mesurée à la température de référence (*T_{ref}*) lorsque la valeur de température (T) mesurée par le capteur de température (2) se situe dans la gamme de mesure de température (ΔT) et est au moins approximativement constante dans l'intervalle de temps (Δt) spécifié.
